# EUROPÄISCHE PATENTSCHRIFT

(11) **EP 0 815 266 B1**
(45) Veröffentlichungstag und Bekanntmachung des Hinweises auf die Patenterteilung: **18.08.1999**
(21) Anmeldenummer: 97900888.5
(22) Anmeldetag: 23.01.1997
(51) Int. Cl.: C21C 5/36, C22B 7/04, C21B 3/04, C03B 5/04

(54) **VERFAHREN ZUM AUFARBEITEN VON MÜLLVERBRENNUNGSRÜCKSTÄNDEN**
METHOD OF PROCESSING BURNT RUBBISH RESIDUES
PROCEDE DE TRAITEMENT DE RESIDUS D'INCINERATION D'ORDURES

(30) Priorität: 24.01.1996 AT 12196
(43) Veröffentlichungstag der Anmeldung: 07.01.1998
(73) Patentinhaber: HOLDERBANK FINANCIERE GLARUS AG, CH-8750 Glarus (CH)
(72) Erfinder: EDLINGER, Alfred, 5400 Baden (CH); MISTELLI, Bruno, 5200 Brugg (CH)
(74) Vertreter: Haffner, Thomas M., Dr.
(86) Internationale Anmeldenummer: AT9700007
(87) Internationale Veröffentlichungsnummer: WO9727339

(56) Entgegenhaltungen:
- EP-A- 0 024 250
- EP-A- 0 515 792
- EP-A- 0 572 769
- WO-A-95/01312
- BE-A- 769 260

## Beschreibung

Die Erfindung bezieht sich auf ein Verfahren zum Aufarbeiten von Müllverbrennungsrückständen, wie z.B. Müllverbrennungsschlacken, bei welchem die Schlacken einer Reduktion unter Abscheidung von Metallen unterworfen werden.

Im Rahmen von Verfahren zur Entsorgung von Haushalts- und gewerblichem Müll wurde bereits vorgeschlagen, die bei der Verbrennung aufgrund der oxidierenden Bedingungen entstehende Schlackenphase in flüssigem Zustand zu reduzieren, um auf diese Weise Metalle bzw. Metallegierungen rückzugewinnen. Derartige einer Müllverbrennungsanlage nachgeschaltete Anlagenteile sind aber in der Regel relativ aufwendig und sind insbesondere bei kleineren Müllverbrennungsanlagen nicht ohne weiteres wirtschaftlich zu betreiben. Insbesondere ist zu berücksichtigen, daß Müllverbrennungsschlacken relativ hohe Anteile an Schwermetallen und Buntmetallen enthalten können und daß daher eine Verhaldung derartiger Müllverbrennungsschlacken nicht ohne weiteres möglich ist. Die weitere Aufarbeitung von flüssigen Müllverbrennungsschlacken setzt entsprechende Schlackenvolumina voraus, wobei aufgrund der ungünstigen Schlackenviskosität derartiger bei der Müllverbrennung entstehender Schlacken eine zusätzliche Erhitzung und damit weiteres Energieeinbringen erforderlich ist.

Die Erfindung zielt nun darauf ab Müllverbrennungsrückstände, wie z.B. Müllverbrennungsschlacken, unterschiedlicher Provenienz in einer Weise umweltkompatibel aufzuarbeiten und unmittelbar Produkte herzustellen, welche sich durch geringen Schadstoffgehalt auszeichnen bzw. als Rohstoff für die weitere Verwendung in Stahlwerken eingesetzt werden können. Gleichzeitig zielt die Erfindung dabei ab aus der ursprünglich ungünstige Eigenschaften aufweisenden Müllverbrennungsschlacke synthetische, gute hydraulische Eigenschaften aufweisende Hochofenschlacke herzustellen. Zur Lösung dieser Aufgabe besteht das erfindungsgemäße Verfahren im wesentlichen darin, daß die festen Müllverbrennungsrückstände in einer Menge von 15 bis 45 Gew.% bezogen auf die Gesamtmenge in ein Stahlwerksschlackenbad eingebracht werden, daß die beim Aufschmelzen der Müllverbrennungsrückstände bzw. -schlacke verdampfenden Schwermetalle oder Schwermetallverbindungen, wie z.B. Zn-, Pb-, Cd- oder Hg-Chloride, abgezogen werden und das flüssige Bad mit Kohlenstoffträgern und unter Ausbildung eines Eisenbades reduziert wird, worauf die an Metallen abgereicherte Schlackenphase granuliert und als Mischzementkomponente eingesetzt wird. Dadurch, daß feste Müllverbrennungsrückstände eingesetzt werden, können Müllverbrennungsrückstände unterschiedlicher Provenienz gesammelt eingesetzt werden und dadurch, daß derartige Müllverbrennungsrückstände in ein flüssiges Stahlwerksschlackenbad eingebracht werden, wird eine Mischschlacke mit einer Basizität, wie sie hochwertiger Hochofenschlacke entspricht, eingestellt. Durch die Einstellung der Basizität auf die für hochwertige Hochofenschlacke typischen Werte, welche dadurch erzielt wird, daß Müllverbrennungsrückstände einer stark basischen Stahlwerksschlacke zugesetzt werden, wird die Viskosität wesentlich herabgesetzt, und es kann bei vergleichsweise geringeren Temperaturen eine entsprechende metallurgische Behandlung erfolgen. Die bei der Neutralisation durch Vermischen der stark basischen Stahlwerksschlacke mit den sauren Müllverbrennungsrückständen freigesetzte Neutralisationswärme erlaubt es gleichzeitig das Aufschmelzen der Müllverbrennungsrückstände weitestgehend autotherm vorzunehmen, sodaß bei gleichzeitiger Verringerung der Viskosität keine oder nur geringe zusätzliche Energie eingebracht werden muß. Dadurch, daß nun ein Stahlwerksschlackenbad in flüssiger Phase eingesetzt wird, wird es möglich gleichzeitig mit der Absenkung des Eisenoxidgehaltes der Schlacke durch Abscheiden von Eisen eine entsprechend gemeinsame oder fraktionierte Abtrennung von metallischen Phasen vorzunehmen, wobei das flüssige Schlackenbad mit Kohlenstoffträgern unter Ausbildung eines Eisenbades reduziert wird. Auf diese Weise wird unmittelbar ein Eisenbad mit Roheisenqualität erzielt, wobei gleichzeitig die Zusammensetzung der ursprünglichen Stahlwerksschlacke in Richtung der Zusammensetzung einer hochwertigen Hochofenschlacke mit entsprechend wesentlich verbesserten hydraulischen Eigenschaften eingestellt werden kann. Im Zuge des Reduktionsvorganges können relativ hohe Anteile an Schwermetallen sicher abgetrennt werden und das verbleibende Roheisen kann unmittelbar im Stahlwerk weiterverwendet werden. Insgesamt kann das erfindungsgemäße Verfahren im Anschluß an einem Stahlwerksprozeß und mit apparativen Einrichtungen durchgeführt werden, wie sie im Stahlwerk unmittelbar zur Verfügung stehen, sodaß ein zusätzlicher apparativer Aufwand für die gewünschte Reinigung und Entsorgung der Müllverbrennungsrückstände unterbleiben kann. Es können insgesamt bestehende Einrichtungen ohne nennenswerte Adaptierungsarbeiten eingesetzt werden, und es kann durch Wahl und Mischung der eingesetzten Müllverbrennungsrückstände unmittelbar die gewünschte Zusammensetzung der synthetischen Hochofenschlacke angesteuert werden, wobei gleichzeitig eine relative hohe Menge an festen Müllverbrennungsrückständen energetisch günstig aufgearbeitet werden kann.

Mit Vorteil wird das erfindungsgemäße Verfahren so durchgeführt, daß die liquidus-Temperatur des Schlackenbades durch Einblasen von Sauerstoff oder Luft in das während der Reduktion aufgekohlte Fe-Bad aufrechterhalten wird. Während der Reduktion wird aus dem Stahlwerksschlackenbad, welches hohe Eisenoxidanteile enthält, ein Eisenbad abgeschieden, welches aufgrund der verringerten Viskosität nach Zusatz der sauren Müllverbrennungsrückstände leichter sedimentiert. Insgesamt kann aber auch bereits zu Beginn des Verfahrens, welches ja im Rahmen eines Stahlwerksprozesses durchgeführt werden kann, eine Restmenge eines Eisenbades vorgelegt werden, wobei für die Reduktion in das Eisenbad Kohlenstoff eingebracht wird, welches zu einer Aufkohlung des Eisenbades führt. Um den Kohlenstoffgehalt des Eisenbades auf Werte zu beschränken, wie sie für Roheisen üblich sind, kann nun die Übermenge an Aufkohlung, wie sie im Zuge der Reduktion des Schlackenbades durch Gleichgewichtsreaktionen zwischen Schlacke und Bad entsteht, dazu verwendet werden, um die liquidus-Temperatur durch Einblasen von Sauerstoff oder Luft und damit zur Vergasung von Kohlenstoff zu Kohlenmonoxid zu verwenden. Derartiges auf diese Weise gebildetes Kohlenmonoxid führt zur Reduktion des Schlacken-Eisenoxides sowie gegebenenfalls von in der Schlacke meist oxidisch gelösten Schwermetallen, wie Kupfer, Zinn, Nickel und Chrom. Das entstehende Kohlenmonoxid kann auf diese Weise in vorteilhafter Weise zumindest teilweise einer energetischen Verwertung im Konverter zugeführt werden, wobei mit Vorteil so vorgegangen wird, daß die Müllverbrennungsrückstände in einen mit O₂ oder Luftdüsen ausgestatteten, insbesondere bodenblasenden Konverter in die Stahlwerksschlacke eingebracht werden. Prinzipiell sind naturgemäß auch andere Konvertertypen verwendbar, und es kann beispielsweise mit Elektroöfen mit integrierter Nachverbrennung oder anderen Reduktionskonvertern gearbeitet werden. Die Verwendung eines bodenblasenden OBM-Konverters stellt aber sowohl von der apparativen Seite als auch von der Energieverwertung eine besonders bevorzugte Variante dar.

Um die gewünschte Schlackenviskosität zu erzielen wird mit Vorteil so vorgegangen, daß 20 bis 40 Gew.% feste Müllverbrennungsrückstände in 60 bis 80 Gew.% Stahlwerks- bzw. LD-Schlacke eingebracht werden.

Wie bereits eingangs erwähnt, kann in besonders vorteilhafter Weise das durch Reduktion gebildete Roheisen als Schrott im Stahlwerk eingesetzt werden.

Um insbesondere bei hohen Anteilen an Nicht-Eisenmetallen eine besonders günstige Schlacken- und Eisenbadführung zu gewährleisten wird mit Vorteil so vorgegangen, daß die Reduktion der flüssigen Schlackenphase wenigstens zweistufig erfolgt, wobei in einer ersten Phase der FeO-Gehalt der Schlackenphase zwischen 1,5 bis 5 Gew.%, vorzugsweise über 2 Gew.%, gehalten wird und das Fe-Bad ausgebracht wird und anschließend die Schlacke unter Zusatz von kohlenstoffreien Reduktionsmitteln, wie z.B. Al, Fe-Si zu Fe-Mn, Fe-Cr und Fe-V Legierungen reduziert wird. Dadurch, daß der FeO-Gehalt der Schlacke oberhalb von 1,5 Gew.% und vorteilhaft oberhalb von 2 Gew.% gehalten wird, verbleiben Cr, V und Mn in der Schlacke und kann nach Abtrennen des Fe-Bades in einer zweiten Reduktion in angereicherter Form selektiv abgetrennt werden. Beim Einbringen der Müllverbrennungsrückstände in fester Form in das Stahlwerksschlakkenbad verdampfen zunächst Schwermetallchloride und gegebenenfalls Oxide. Insbesondere verdampfen Zink, Blei, Kadmium und Quecksilber praktisch quantitativ. Chlorverbindungen von Kupfer, Zinn und Nickel können gleichfalls bei dem Einbringen von festen Müllverbrennungsrückständen bereits teilweise verdampfen. Lediglich Chrom verbleibt praktisch quantitativ in der Schlacke, wobei auch ein großer Teil von gegebenenfalls anwesendem Schwefel in der Schlacke eingebunden wird. Die in der Schlacke und insbesondere im Schlackeneisenoxid oxidisch gelösten Schwermetalle, wie Kupfer, Zinn, Nickel und Chrom können durch im Eisenbad gelösten Kohlenstoff bzw. Kohlenmonoxid leicht und schnell in den entstehenden Eisenregulus reduziert werden. Sollte in der Schlacke Chromoxid verbleiben, kann dieses durch Zugabe von Aluminium oder Eisensilizium oder anderen kohlenstoffreien Reduktionsmitteln rasch und einfach in das Eisenbad reduziert werden. Insgesamt entsteht somit eine von Nicht-Eisenmetallen weitestgehend gereinigte reduzierte Schlakke, welche als optimale Mischzementkomponente bzw. synthetischer Hochofenzement eingesetzt werden kann. Das Endprodukt zeichnet sich durch extrem niedrigen Schwermetallgehalt aus, wobei das entstehende Roheisen mit vergleichsweise hohem Kohlenstoffanteil in flüssiger Form unmittelbar im Stahlwerk wiederum eingesetzt werden kann.

Die Erfindung wird nachfolgend anhand eines Ausführungsbeispieles näher erläutert. Flüssige LD-Schlacke mit der nachfolgenden Zusammensetzung

| | |
|---|---|
| Stahl | 20 Gew.% |
| SiO₂ | 13 Gew.% |
| Al₂O₃ | 1 Gew.% |
| CaO | 33 Gew.% |
| MgO | 4 Gew.% |
| FeO | 21 Gew.% |
| S | 0,05 Gew.% |
| P | 0,5 Gew.% |
| Cr | 0,15 Gew.% |

wurde im Verhältnis 70:30 mit einer Müllverbrennungsschlacke mit der Zusammensetzung

| | |
|---|---|
| SiO₂ | 43 Gew.% |
| CaO | 13 Gew.% |
| Al₂O₃ | 8,5 Gew.% |
| Fe₂O₃ | 10 Gew.% |
| MgO | 1,5 Gew.% |
| Na₂O | 3,5 Gew.% |
| SO₃ | 1 Gew.% |
| TiO₂ | 1,5 Gew.% |
| Cu | 0,4 Gew.% |
| Ni | 0,04 Gew.% |
| Cr | 0,15 Gew.% |
| Zn | 0,35 Gew.% |
| Pb | 0,15 Gew.% |

in einen bodenblasenden Konverter eingebracht, wobei eine intensive Durchmischung erfolgte. Die Mischschlacke zeichnete sich durch nachfolgende Zusammensetzung

| | |
|---|---|
| Stahl | 17 Gew.% |
| SiO₂ | 24 Gew.% |
| CaO | 28 Gew.% |
| Al₂O₃ | 6 Gew.% |
| Fe₂O₃ | 18 Gew.% |
| MgO | 3 Gew.% |
| Na₂O | 1 Gew.% |
| SO₃ | 0,3 Gew.% |
| TiO₂ | 0,6 Gew.% |
| Cu | 0,15 Gew.% |
| Ni | 0,02 Gew.% |
| Cr | 0,2 Gew.% |
| P | 0,35 Gew.% |

aus.

Nach erfolgter Schlackenreduktion wurde eine synthetische Hochofenschlacke mit nachfolgender Zusammensetzung

| | |
|---|---|
| SiO₂ | 38 Gew.% |
| CaO | 43 Gew.% |
| Al₂O₃ | 11 Gew.% |
| MgO | 5 Gew.% |
| Na₂O | 2 Gew.% |

ausgebildet, wobei die Reduktion mittels Kohlenstoff, Kohlenmonoxid und Aluminium in einem OBM-Konverter vorgenommen wurde. In der auf diese Weise gewonnenen Reinschlacke waren Schwermetalle mittels Röntgen-Fluoreszenz-Analyse nicht mehr nachzuweisen, woraus geschlossen werden kann, daß diese Metalle nur mehr deutlich unter 100 ppm vorliegen können.

Die wassergranulierte Schlacke entspricht hydraulisch höchstwertiger Hochofenschlacke im Mischzement und zeichnet sich durch einen Keilindex von größer als 100 % aus.

Das entstandene Roheisen wurde mit folgender Zusammensetzung gewonnen:

| | |
|---|---|
| C | 3,5 Gew.% |
| Cu | 0,5 Gew.% |
| Ni | 0,1 Gew.% |
| Cr | 0,6 Gew.% |
| P | 1 Gew.% |
| Al | 1,5 Gew.% |
| Rest Fe | |

Das Roheisen zeichnet sich durch relativ niedrigen Schwermetallgehalt und insbesondere geringen Kupfergehalt aus, wodurch dieses Eisen vorteilhaft im Stahlwerk weiterbehandelt werden kann.

## Patentansprüche

1. Verfahren zum Aufarbeiten von Müllverbrennungsrückständen, wie z.B. Müllverbrennungsschlacken, bei welchem die Schlacken einer Reduktion unter Abscheidung von Metallen unterworfen werden, dadurch gekennzeichnet, daß die festen Müllverbrennungsrückstände in einer Menge von 15 bis 45 Gew.% bezogen auf die Gesamtmenge in ein Stahlwerksschlackenbad eingebracht werden, daß die beim Aufschmelzen der Müllverbrennungsrückstände bzw. -schlacke verdampfenden Schwermetalle oder Schwermetallverbindungen, wie z.B. Zn-, Pb-, Cd- oder Hg-Chloride, abgezogen werden und das flüssige Bad mit Kohlenstoffträgern und unter Ausbildung eines Eisenbades reduziert wird, worauf die an Metallen abgereicherte Schlackenphase granuliert und als Mischzementkomponente eingesetzt wird.

2. Verfahren nach Anspruch 1, dadurch gekennzeichnet, daß die liquidus-Temperatur des Schlackenbades durch Einblasen von Sauerstoff oder Luft in das während der Reduktion aufgekohlte Fe-Bad aufrechterhalten wird.

3. Verfahren nach Anspruch 1 oder 2, dadurch gekennzeichnet, daß 20 bis 40 Gew.% feste Müllverbrennungsrückstände in 60 bis 80 Gew.% Stahlwerks- bzw. LD-Schlacke eingebracht werden.

4. Verfahren nach Anspruch 1, 2 oder 3, dadurch gekennzeichnet, daß die Müllverbrennungsrückstände in einen mit O₂ oder Luftdüsen ausgestatteten, insbesondere bodenblasenden Konverter in die Stahlwerksschlacke eingebracht werden.

5. Verfahren nach einem der Ansprüche 1 bis 4, dadurch gekennzeichnet, daß das durch Reduktion gebildete Roheisen als Schrott im Stahlwerk eingesetzt wird.

6. Verfahren nach einem der Ansprüche 1 bis 5, dadurch gekennzeichnet, daß die Reduktion der flüssigen Schlackenphase wenigstens zweistufig erfolgt, wobei in einer ersten Phase der FeO-Gehalt der Schlackenphase zwischen 1,5 bis 5 Gew.%, vorzugsweise über 2 Gew.%, gehalten wird und das Fe-Bad ausgebracht wird und anschließend die Schlacke unter Zusatz von kohlenstoffreien Reduktionsmitteln, wie z.B. Al, Fe-Si zu Fe-Mn, Fe-Cr und Fe-V Legierungen reduziert wird.

## Claims

1. A process for processing waste incineration residues, such as, e.g., waste incineration slags, in which the slags are subjected to a reduction process while separating metals, characterized in that the solid waste incineration residues are introduced into a steelworks slag bath in amounts ranging from 15 to 45 % by weight, based on the overall quantity, that the heavy metals or heavy metal compounds, such as, e.g., Zn, Pb, Cd or Hg chlorides, evaporating during melting of the waste incineration residues or slag are drawn off and the liquid bath is reduced by aid of carbon carriers and under the formation of an iron bath, whereupon the slag phase depleted from metals is granulated and used as a mixed cement component.

2. A process according to claim 1, characterized in that the liquidus temperature of the slag bath is maintained by blowing oxygen or air into the Fe bath carburized during reduction.

3. A process according to claim 1 or 2, characterized in that 20 to 40 % by weight of solid waste incineration residues is introduced into 60 to 80 % by weight of steelworks or LD slag.

4. A process according to claim 1, 2 or 3, characterized in that the waste incineration residues are charged into the steelworks slag in a, particularly bottom-blowing, converter equipped with O₂ or air nozzles.

5. A process according to any one of claims 1 to 4, characterized in that the pig iron formed by reduction is used as scrap in a steelmaking plant.

6. A process according to any one of claims 1 to 5, characterized in that the reduction of the liquid slag phase is effected in at least two steps, wherein in a first phase the FeO content of the slag phase is maintained at between 1.5 and 5 % by weight, preferably above 2 % by weight, and the Fe bath is discharged and subsequently the slag is reduced to Fe-Mn, Fe-Cr and Fe-V alloys upon the addition of carbon-free reductants, such as, e.g., Al, Fe-Si.

## Revendications

1. Procédé pour le retraitement de résidus d'incinération d'ordures, comme par exemple des scories d'incinération d'ordures, selon lequel on soumet les scories à une réduction avec séparation de métaux, caractérisé en ce qu'on introduit les résidus solides d'incinération d'ordures, en une quantité de 15 à 45 % en poids rapportés à la quantité totale, dans un bain de scories d'aciérie, en ce qu'on retire les métaux lourds ou les composés de métaux lourds, comme par exemple des chlorures de Zn, de Pb, de Cd ou de Hg, qui sont vaporisent lors de la fusion des résidus ou des scories d'incinération d'ordures, et on réduit le bain liquide à l'aide de porteurs de carbone et avec formation d'un bain de fer, à la suite de quoi on met sous forme de granulés la phase de scories appauvrie en métaux et on l'utilise en tant que constituant de ciments mélangés.

2. Procédé selon la revendication 1, caractérisé en ce qu'on maintient la température de liquidus du bain de scories en injectant par soufflage de l'oxygène ou de l'air dans le bain de Fe cémenté pendant la réduction.

3. Procédé selon la revendication 1 ou 2, caractérisé en ce qu'on introduit 20 à 40 % en poids de résidus solides d'incinération d'ordures dans 60 à 80 % en poids de scories d'aciérie ou de scories de LD.

4. Procédé selon la revendication 1, 2 ou 3, caractérisé en ce qu'on introduit les résidus d'incinération d'ordures dans un convertisseur équipé d'injecteurs de O₂ ou d'injecteurs d'air, notamment un convertisseur à soufflage par le fond, dans les scories d'aciérie.

5. Procédé selon l'une des revendications 1 à 4, caractérisé en ce que la fonte brute formée par réduction est utilisé comme ferrailles dans l'aciérie.

6. Procédé selon l'une des revendications 1 à 5, caractérisé en ce que la réduction de la phase liquide de scories s'effectue en au moins deux étapes, auquel cas dans une première phase on maintient la teneur en FeO de la phase de scories entre 1,5 et 5 % en poids, de préférence au-dessus de 2 % en poids, et on retire le bain de Fe et, ensuite, on réduit les scories en ajoutant des agents réducteurs exempts de carbone, comme par exemple du Al, des alliages Fe-Si à Fe-Mn, Fe-Cr et Fe-V.
